# EUROPEAN PATENT APPLICATION

(11) **EP 1 942 570 A1**
(43) Date of publication of application: **09.07.2008**
(21) Application number: 07033586.4
(22) Date of filing: 24.12.2007
(51) Int. Cl.: H02J 7/02, H02J 7/00, H04M 1/60, H04M 1/737

(54) **A headset with a rechargeable battery, a base unit adapted to charge a rechargeable battery and a communications unit**

(30) Priority: 04.01.2007 DK 200700005
(71) Applicant: GN A/S, 2750 Ballerup (DK)
(72) Inventor: Reinholdt-Nielsen, Christian, 3600 Frederikssund (DK)
(74) Representative: Larsen, Hans Ole

(57) **Abstract**

A headset with a rechargeable battery is charged inductively via a secondary coil, which is coupled to a primary coil which is incorporated in a base unit.

The headset has an AC-DC converter which comprises a voltage doubler, while the base unit has a DC-AC converter which comprises a self-oscillating circuit.

The invention provides an inductive charging arrangement which may be composed of few components, and thus be compact, and additionally has a high efficiency with a low power loss, as the self-oscillating circuit adapts its switch frequency to whether it is loaded or non-loaded.

## Description

The invention relates to a headset with a rechargeable battery adapted to be charged by a DC current via an inductive coupling, said headset comprising a secondary coil of the inductive coupling as well as an AC-DC converter for providing the DC current, said AC-DC converter being connected to the secondary coil.

The invention moreover relates to a base unit adapted to charge a rechargeable battery in a headset via an inductive coupling, said base unit comprising a DC-AC converter which is connected to a primary coil of the inductive coupling.

Finally, the invention relates to a communications unit comprising a base unit and a headset with a rechargeable battery adapted to be charged via a DC-DC converter, said base unit comprising a primary side of the DC-DC converter in the form of a DC-AC converter connected to a primary coil, said headset comprising a secondary side of the DC-DC converter in the form of a secondary coil and an AC-DC converter, said primary coil and said secondary coil forming an inductive coupling.

US 2005/0017677 discloses an induction charger which may be used inter alia in connection with a headset. This known induction charger is of a general type which provides for several possible settings, as the secondary side includes voltage and current meters as well as a processor which controls a switching circuit to adapt charging current.

Further, EP 1414221 A1 discloses a headset with a rechargeable battery which may be charged inductively. However, no concrete embodiment of the inductive system is disclosed.

Finally, US 2003/0211871 A1 discloses a headset which may be charged inductively. Nor does this document disclose any concrete embodiment of the inductive system, but mentions that charging may take place via a charger tray.

Accordingly, an object of the invention is to provide a headset which may be charged inductively by means of few components.

The object of the invention is achieved by a headset of the type defined in the introductory portion of claim 1, which is characterized in that the AC-DC converter comprises a voltage doubler.

Such a voltage doubler is composed of relatively few components and moreover has the advantage that the coil included on the secondary side may be composed of few windings, which in turn means that space may be saved when it is incorporated in a compact headset.

A good, realizable structure of the voltage doubler with few components is, as stated in claim 2, that the voltage doubler is formed by two series connections, each said series connection comprising a diode and a capacitor, and, as stated in claim 3, that the voltage doubler comprises two diodes and two capacitors, and that a common terminal of the two diodes is connected to the first terminal of the secondary coil, and that a common terminal of the two capacitors is connected to the second terminal of the secondary coil, and, as stated in claim 4, that the voltage doubler is adapted to charge the capacitors in that the two diodes are biased in the forward direction in their respective half-periods by an applied AC signal.

In order to be able to minimize the size and the weight of the headset, it is advantageous, as stated in claim 5, that the secondary coil is an air coil.

To ensure a good, inductive coupling, it is expedient, if, as stated in claim 6, the headset is adapted to be coupled to a base unit comprising a primary coil, such that the primary coil and the secondary coil constitute an inductive coupling during the charging of the rechargeable battery, and, as stated in claim 7, that the headset is adapted to engage a base unit comprising a primary coil, such that the primary coil and the secondary coil are concentric when the headset and the base unit are in engagement.

It is moreover expedient, as stated in claim 8, that the headset is configured with a projection or a depression to provide a concentric position of the secondary coil relative to the primary coil, said projection or depression being adapted to engage the base unit, as this makes it easy to adapt several types of headsets mechanically to the base unit.

Further advantageous features of the headset are defined in claims 9 and 10.

As mentioned, the invention also relates to a base unit. This base unit is characterized in that the DC-AC converter comprises a self-oscillating circuit. This provides the advantage that the circuit always switches optimally, both then it is loaded and non-loaded, which in turn means that radiation and power consumption will be as small as possible.

An expedient way of realizing the self-oscillating circuit is, as stated in claim 12, that it comprises two transistors which are interconnected via a series connection of two coils which constitute the primary coil, and that a capacitor is connected in parallel with the coils, and, as stated in claim 13, that the two coils have a common terminal which is connected to a series connection of a DC source and a third coil, and, as stated in claim 14, that the two coils have a common terminal which is connected to a DC source, and that the two transistors have a common terminal which is connected to a third coil, and, as stated in claim 15, that the two transistors are NPN transistors.

A simple implementation of the two coils is, as stated in claim 16, that the coils are formed by a single coil having a central tap.

In order to be able to minimize the size and the weight of the base unit, it is advantageous, as stated in claim 17, that the primary coil is an air coil.

An advantageous embodiment of the base unit is, as stated in claim 18, that it is adapted to be coupled to a headset comprising a secondary coil, such that the primary coil and the secondary coil constitute an inductive coupling during the charging of the rechargeable battery, and, as stated in claim 19, that it is adapted to engage a headset comprising a secondary coil, such that the primary coil and the secondary coil are concentric when the base unit and the headset are in engagement.

Finally, it is advantageous, as stated in claim 20, that the base unit is configured with a projection or a depression to provide a concentric position of the primary coil relative to the secondary coil, said projection or depression being adapted to engage the headset, as this makes it easy to adapt several types of headsets mechanically to the base unit.

As mentioned, the invention also relates to a communications unit. This communications unit is characterized in that the DC-AC converter comprises a self-oscillating circuit, and that the AC-DC converter comprises a voltage doubler.

The invention will now be explained more fully with reference to the drawing, in which:
- fig.1: shows the basic structure of a DC-DC converter in a communications unit according to the invention,
- fig. 2: shows how a primary coil and a secondary coil are coupled in the DC-DC converter,
- fig. 3: shows an AC-DC converter in a headset according to the invention,
- fig. 4: shows a DC-AC converter in a base unit according to the invention,
- fig. 4A: shows an alternative embodiment of the circuit of fig. 4,
- fig. 5: shows voltage characteristics of the circuit in figs. 4 and 4A,
- fig. 6: shows further voltage characteristics of the DC-AC converter in figs. 4 and 4A, while
- fig. 7: shows current and voltage characteristics of the AC-DC converter in fig. 3.

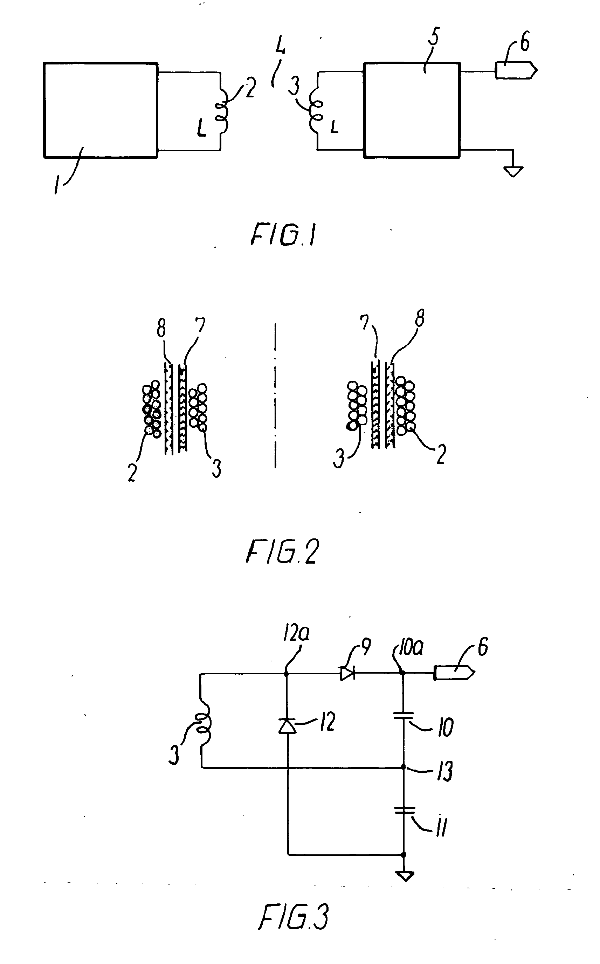

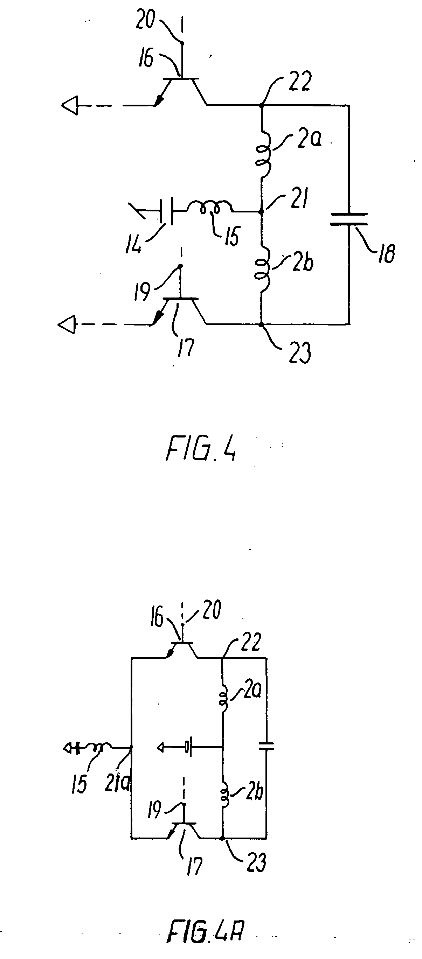

Fig. 1 shows a DC-DC converter in a communications unit according to the invention, where the numeral 1 designates a DC-AC converter which is connected to a coil 2, which, as shown in fig. 4, may be formed by two coils 2a, 2b or by a single coil having a central tap. The DC/AC converter and the coil 2 may be arranged in a base unit adapted to be connected to a headset.

The input gate to the DC-AC converter may be connected to the public mains system via a rectifier and a voltage divider, as is well-known.

The numeral 5 designates an AC-DC converter which is connected to a coil 3. The output of the AC-DC converter applies a DC voltage to a terminal 6, which may be connected to a rechargeable battery (not shown), which may be arranged in a headset.

The circuit of fig. 1 operates in that a generated AC voltage on the coil 2 is transferred inductively to the coil 3, such that the rechargeable battery may be charged through a galvanically separated coupling, whereby mechanical and electrical plug connections between the base unit and the headset are omitted. The DC-AC converter and the coil 2 form the primary side, and the AC-DC converter and the coil 3 form the secondary side in the assembled DC-DC converter.

The use of an inductive coupling, as described, for the charging of a headset allows the transfer of energy to the rechargeable battery to take place without it being necessary to provide holes in the headset, as the inductive coupling operates directly through the housing or cabinet of the headset, which surrounds the inner, electrical parts.

Fig. 2 shows how the primary coil 2 and the secondary coil 3 may be coupled to each other. The primary coil 2 is outermost and concentric with the secondary coil 3. They are separated by chassis parts 7, 8, of which the chassis part 7 constitutes a portion of a housing of a headset, while the chassis part 8 constitutes a portion of a housing of a base unit which comprises the DC-AC converter 1.

If the coils 2, 3 are arranged as air coils, i.e. coils without an iron core, in a communications unit according to the invention, a reduction of both size and weight will be achieved hereby, which is advantageous in e.g. wireless headsets which communicate via Bluetooth or another wireless standard.

The chassis parts may be provided with depressions or projections which are adapted to engage each other. The base unit may e.g. be provided with a depression which is adapted to receive a pin provided in the headset, or vice versa. Hereby, a concentric position of the coils may be ensured, which gives an optimum transfer of energy in the inductive coupling. The coils incorporated in the DC-AC and AC-DC converters may be embedded in the chassis parts.

Fig. 3 shows the AC-DC converter 5 in the form of a voltage doubler. In one embodiment, it is formed by a diode 9, whose one terminal is connected to a terminal 12a on the secondary coil 3, while its other terminal 10a is connected to a capacitor 10, whose opposite terminal 13 is connected to the other terminal 13 of the secondary coil 3.

In addition, the other terminal 13 of the secondary coil 3 has connected thereto a capacitor 11, whose opposite terminal is connected to a terminal on a diode 12, whose opposite terminal is connected to the common terminal 12a between the secondary coil 3 and the diode 9.

The voltage doubler serves as two series connections, which operate in their respective half-periods by an applied AC signal. Each series connection consists of a diode and a capacitor, where the diode, when conducting current, will charge the capacitor.

When current and voltage are induced in the secondary coil 3, the diode 9 will conduct in the positive half-wave and thus charge the capacitor 10. The diode 12 will be in a reverse direction and thus will not conduct current. The opposite applies in the negative half-wave. Here, the diode 12 will conduct and charge the capacitor 11, while the diode 9 is in a reverse direction and does not conduct current.

If it is assumed that voltages across the secondary coil are 3 Erms, the peak voltage across the capacitor 10 will be 1.4 x Erms, and also the voltage across the capacitor 11 will be 1.4 x Erms. The voltage level at the point 6 will be twice the voltage at the point 13. The total voltage across the two capacitors will therefore be 2.8 x Erms. That is twice the voltage which is achieved by a conventional rectifier bridge consisting of four diodes.

As the voltage on the secondary side is determined by the proportion of the number of windings on the primary and secondary coils, a reduction in the number of windings on the secondary side is achieved. This means that the coil takes up less physical space and will be easier to configure to the desired geometry.

In addition, the diode voltage loss is reduced, as there is only the loss in one diode in each half-wave, whereas, in a conventional rectifier bridge with four diodes, there will be a diode voltage loss in two diodes in each half-wave.

With reference now to fig. 4, it will be explained how the DC-AC converter 11 in the form of a self-oscillating circuit is constructed.

The coil 2 consists of two coils 2a, 2b or a coil with a central tap 21. The central tap 21 of the coils is coupled to a series connection of a DC source 14 and a coil 15. The coils 2a and 2b are connected in parallel to a capacitor 18 via the terminals 22, 23.

The terminals 22, 23 are moreover coupled to their respective transistors 16, 17 (Q1 and Q2), which are capable of receiving control signals from a control circuit (not shown) on their bases 20 and 19, respectively.

Fig. 4A shows an alternative embodiment of the self-oscillating circuit in fig. 4. Here, the coil 15 has been moved from the series connection with the DC supply to a location between earth and a common terminal 21 a of the two transistors. The principle of the mode of operation is unchanged relative to the circuit shown in fig. 4.

It will then be explained how the circuit of figs. 1 - 4A operates.

By alternately applying pulses to the bases 19, 20 on the transistors 16, 17, the DC source 14 will generate a sine-shaped AC voltage on the coils 2a, 2b through the coil 15, which will be transferred to the coil 3 in the AC-DC converter 5 and further to a rechargeable battery.

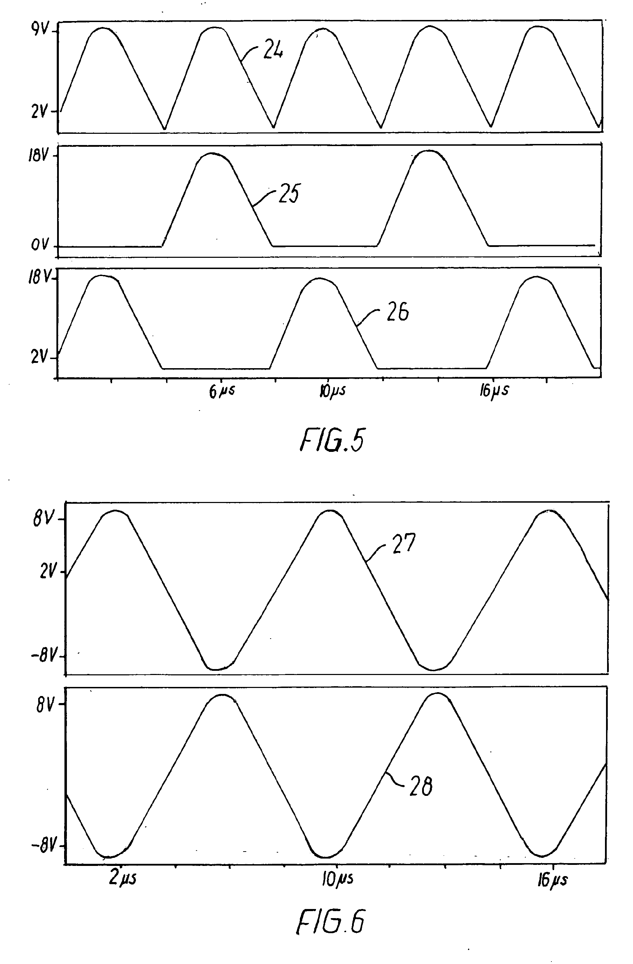

In fig. 5, the numeral 24 shows a voltage which is generated on the terminal 21 in response to the voltages 25, 26, which are the collector voltages on Q1 and Q2, respectively.

The voltages across the two coils 2a and 2b are shown at 27 and 28, respectively, in fig. 6.

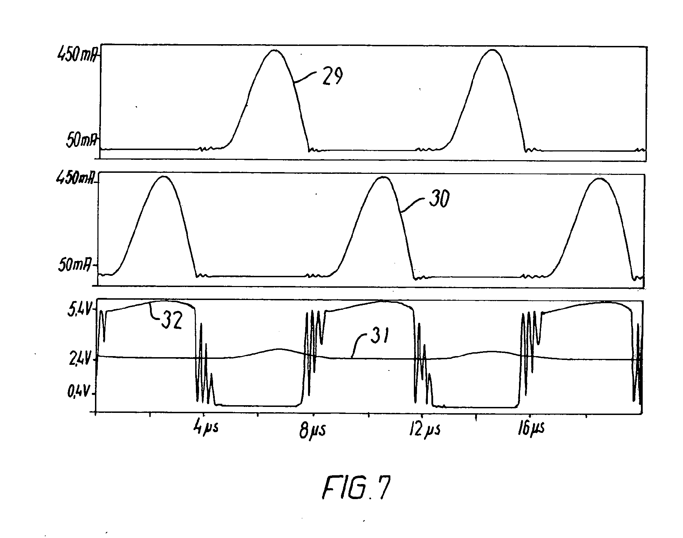

In fig. 7, the numeral 29 designates a current through the diode 12 in fig. 3, while the numeral 30 designates the current through the diode 9. The voltage across the coil 3 is composed of a DC component 31 and a pulsating voltage 32, which is symmetrical relative to the component 31.

The switch frequency is adapted on the primary side of the DC-DC converter by the self-oscillating circuit in response to the load on the secondary side. Since the circuit 1 is self-oscillating, and the switch frequency will change because of the inductance in the assembled transformer, the circuit will switch optimally, both when it is loaded by a rechargeable battery which is to be supplied with a DC current, and when it is non-loaded. When the circuit switches optimally, the radiation is minimum, and the power consumption of the circuit will be low, i.e. unnecessary energy is not consumed when the headset is not positioned in the base unit.

As will be seen in fig. 6, an approximately sine-shaped signal is involved, which is transferred via the inductive coupling. This has the advantage that, in practice, this also means quite few harmonics to the switch frequency, which therefore gives a very low, air-borne radiation and thus a high efficiency of the assembled DC-DC converter.

## Claims

1. A headset with a rechargeable battery adapted to be charged by a DC current via an inductive coupling (4), said headset comprising a secondary coil (3) of the inductive coupling as well as an AC-DC converter (5) for providing the DC current, said AC-DC converter being connected to the secondary coil (3), **characterized in that** the AC-DC converter comprises a voltage doubler.

2. A headset according to claim 1, **characterized in that** the voltage doubler is formed by two series connections, each said series connection comprising a diode and a capacitor.

3. A headset according to claim 1 or 2, **characterized in that** the voltage doubler comprises two diodes (9, 12) and two capacitors (10, 11), and that a common terminal (12a) of the two diodes is connected to the first terminal of the secondary coil (3), and that a common terminal (13) of the two capacitors is connected to the second terminal of the secondary coil (3).

4. A headset according to claim 2 or 3, **characterized in that** the voltage doubler is adapted to charge the capacitors (10, 11) **in that** the two diodes (9, 12) are biased in the forward direction in their respective half-periods by an applied AC signal.

5. A headset according to claims 1 - 4, **characterized in that** the secondary coil (3) is an air coil.

6. A headset according to claims 1 - 5, **characterized in that** it is adapted to be coupled to a base unit comprising a primary coil (2), such that the primary coil (2) and the secondary coil (3) constitute an inductive coupling (4) during the charging of the rechargeable battery.

7. A headset according to claims 1 - 6, **characterized in that** it is adapted to engage a base unit comprising a primary coil (2), such that the primary coil (2) and the secondary coil (3) are concentric when the headset and the base unit are in engagement.

8. A headset according to claims 6 - 7, **characterized in that** it is configured with a projection or a depression to provide a concentric position of the secondary coil (3) relative to the primary coil (2), said projection or depression being adapted to engage the base unit.

9. A headset according to claims 1 - 8, **characterized in that** it is a wireless headset.

10. A headset according to claims 1 - 9, **characterized in that** it is a Bluetooth headset.

11. A base unit adapted to charge a rechargeable battery in a headset via an inductive coupling (4), said base unit comprising a DC-AC converter (1) which is connected to a primary coil (2) of the inductive coupling, **characterized in that** the DC-AC converter comprises a self-oscillating circuit.

12. A base unit according to claim 11, **characterized in that** the self-oscillating circuit (1, 2) comprises two transistors (16, 17) which are interconnected via a series connection of two coils (2a, 2b) which constitute the primary coil (2), and that a capacitor (18) is connected in parallel with the coils.

13. A base unit according to claim 12, **characterized in that** the two coils (2a, 2b) have a common terminal (21) which is connected to a series connection of a DC source (14) and a third coil (15).

14. A base unit according to claim 12, **characterized in that** the two coils (2a, 2b) have a common terminal (21) which is connected to a DC source (14), and that the two transistors (16, 17) have a common terminal (21 a) which is connected to a third coil (15).

15. A base unit according to claims 12 - 14, **characterized in that** the two transistors (16, 17) are NPN transistors.

16. A base unit according to claims 12 - 15, **characterized in that** two of the coils (2a, 2b, 15) are formed by a single coil having a central tap.

17. A base unit according to claims 11 - 16, **characterized in that** the primary coil (2) is an air coil.

18. A base unit according to claims 11 - 17, **characterized in that** it is adapted to be coupled to a headset comprising a secondary coil (3), such that the primary coil (2) and the secondary coil (3) constitute an inductive coupling (4) during the charging of the rechargeable battery.

19. A base unit according to claims 11 - 18, **characterized in that** it is adapted to engage a headset comprising a secondary coil (3), such that the primary coil (2) and the secondary coil (3) are concentric when the base unit and the headset are in engagement.

20. A base unit according to claims 18 - 19, **characterized in that** it is configured with a projection or a depression to provide a concentric position of the primary coil (2) relative to the secondary coil (3), said projection or depression being adapted to engage the headset.

21. A communications unit comprising a base unit and a headset with a rechargeable battery adapted to be charged via a DC-DC converter, said base unit comprising a primary side (1, 2) of the DC-DC converter in the form of a DC-AC converter (1) connected to a primary coil (2), said headset comprising a secondary side (3, 5) of the DC-DC converter in the form of a secondary coil (3) and an AC-DC converter (5), said primary coil and said secondary coil constituting an inductive coupling (4), **characterized in that** the DC-AC converter comprises a self-oscillating circuit, and that the AC-DC converter comprises a voltage doubler.
